# EUROPÄISCHE PATENTSCHRIFT

(11) **EP 2 652 160 B1**
(45) Veröffentlichungstag und Bekanntmachung des Hinweises auf die Patenterteilung: **14.10.2015**
(21) Anmeldenummer: 11791569.4
(22) Anmeldetag: 07.12.2011
(51) Int. Cl.: C21D 1/42, C21D 9/30, F27D 11/06, H05B 6/10

(54) **HEIZVORRICHTUNG**
HEATING DEVICE
DISPOSITIF DE CHAUFFAGE

(30) Priorität: 15.12.2010 DE 102010063142; 22.02.2011 DE 102011004530
(43) Veröffentlichungstag der Anmeldung: 23.10.2013
(73) Patentinhaber: Mahle International GmbH, 70376 Stuttgart (DE)
(72) Erfinder: BEERENS, Christoph, 70193 Stuttgart (DE); MENONNA, Antonio, 71254 Ditzingen (DE); ZAHIROVIC, Almir, 70197 Stuttgart (DE)
(74) Vertreter: BRP Renaud & Partner mbB Rechtsanwälte Patentanwälte Steuerberater
(86) Internationale Anmeldenummer: PCT/EP2011/072009
(87) Internationale Veröffentlichungsnummer: WO 2012/080049

(56) Entgegenhaltungen:
- DE-C- 765 499
- JP-A- 2002 047 515
- JP-A- 2002 105 532
- JP-A- 2009 019 237
- JP-A- 2009 249 694
- US-A- 4 714 809
- US-A1- 2003 067 376
- US-A1- 2004 069 773

## Beschreibung

Die vorliegende Erfindung betrifft eine Heizvorrichtung zum Erhitzen von insbesondere unrunden, hohlen Bauteilen. Die Erfindung betrifft außerdem ein Verfahren zum Erhitzen eines Nockens mit einer derartigen Heizvorrichtung als Vorbereitung für einen späteren Fügeprozess.

Das thermische Fügen von Nocken auf Nockenwellen ist ein hinlänglich bekannter und lang erprobter Fertigungsprozess, der aufgrund der unrunden Nockengeometrie jedoch immer wieder zu Schwierigkeiten führt. Bei einem insbesondere induktiven Erhitzen der Nocken, erwärmen sich diese nämlich in dünnen Bereichen, also beispielsweise im Bereich eines Grundkreises, deutlich schneller und deutlich höher als im Bereich der maximalen Nockenhöhe, was zu einer unrunden Fügestelle und zu teilweise großem Verzug des erwärmten Nocken führen konnte. Hierdurch bedingt waren stets höhere Temperaturen bzw. größere Aufweitungen am Grundkreis, die jedoch einen Härteabfall verursachten, was bei höheren Härten am fertigen Nocken Probleme verursachen konnte. Bei Nocken handelt es sich bekannterweise um asymmetrische Bauteile, die mit bisherigen aus dem Stand der Technik bekannten symmetrischen Spulen als Heizvorrichtungen lediglich ungleichförmig, das heißt ungleichmäßig erwärmt werden konnten. Alternativ hierzu können an einen jeweiligen Nocken angepasste unsymmetrische Formspulen eingesetzt werden, die jedoch teuer sind.

Eine Vorrichtung zum induktiven Oberflächenerhitzen von Hohlkörpern ist aus jedem von DE 765 499, US 2003/067376 sowie JP-A 2009 019 237 bekannt.

Die vorliegende Erfindung beschäftigt sich mit dem Problem, eine Heizvorrichtung zum Erhitzen von insbesondere unrunden, hohlen Bauteilen, beispielsweise Nocken, anzugeben, mit welcher die aus dem Stand der Technik bekannten Nachteile vermieden werden können.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, asymmetrische Bauteile dickenabhängig und damit gleichmäßig zu erwärmen, wobei eine Heizvorrichtung zum Erhitzen der unrunden, hohlen Bauteile, wie beispielsweise Nocken, mit zumindest einer, das zu erhitzende Bauteil durchdringenden inneren Induktionsspule und/oder einer, das zu erhitzende Bauteil umgebenden äußeren Induktionsspule ausgestattet wird und wobei in denjenigen Bereichen des zu erhitzenden Bauteils, die sich schneller als die übrigen Bereiche erhitzen, beispielsweise weil sie dünner sind, zwischen der inneren/äußeren Induktionsspule und dem zu erhitzenden Bauteil zumindest ein, ein sich beim Betrieb der Heizvorrichtung bildendes Magnetfeld beeinflussendes Element positioniert wird, und/oder wobei in denjenigen Bereichen des zu erhitzenden Bauteils, die sich langsamer als die übrigen Bereiche erhitzen, beispielsweise weil sie dicker sind, innerhalb der inneren Induktionsspule und/oder außerhalb der äußeren Induktionsspule ein derartiges Element positioniert wird, welches das Magnetfeld in diesem Bereich schwächt oder verstärkt und dadurch ein gleichförmiges Erhitzen des unrunden Bauteils ermöglicht. Es kann somit alternativ eine innere oder eine äußere Induktionsspule oder kumulativ sowohl eine innere als auch eine äußere Induktionsspule vorgesehen sein, wobei jeweils zwischen der inneren und der äußeren Induktionsspule und/oder innerhalb der inneren Induktionsspule und/oder außerhalb der äußeren Induktionsspule wenigstens ein Element (Abschirm-/Verstärkungselement) angeordnet sein kann. Mit dem zumindest einen Element können somit die sich schneller erhitzenden Bereiche abgeschirmt oder das Magnetfeld in den sich langsamer erhitzenden Bereichen verstärkt werden und dadurch eine besonders gleichmäßige Erhitzung des Bauteils erreicht werden. Verbunden mit der gleichmäßigen Erhitzung des Bauteils, also beispielsweise des Nockens, kann eine runde Fügestelle beim späteren thermischen Fügen mit der Nockenwelle erreicht werden, wodurch die Qualität der thermischen Fügung verbessert werden kann. Darüber hinaus wird das zu erhitzende Bauteil insgesamt weniger stark erhitzt, insbesondere in den abgeschirmten Bereichen, was beispielsweise bei als Nocken ausgebildeten Bauteilen zu einem deutlich geringeren Anlasseffekt und damit Härteabfall führt. Mit der erfindungsgemäßen Heizvorrichtung ist somit ein vorzugsweise vollständig gleichmäßiges Erhitzen des Nockens unabhängig von seinen Bereichen möglich. Der große Vorteil der erfindungsgemäßen Heizvorrichtung liegt insbesondere darin, dass keine aufwändigen und teuren Formspulen benötigt werden, sondern einfach zu wickelnde Induktionsspulen verwendet werden können.

Bei einer vorteilhaften Weiterbildung der erfindungsgemäßen Lösung, ist das zumindest eine Element, insbesondere elektrisch, pneumatisch oder hydraulisch verstellbar. Ein derartig verstellbares Element erleichtert zum Einen den Erhitzungsvorgang, da es beispielsweise erst nach dem Einlegen des zu erhitzenden Bauteils in die Heizvorrichtung in Position gefahren wird. Gleichzeitig ist auch denkbar, dass das Element derartig ausgebildet ist, dass es während des Erhitzungsvorgangs verstellbar ist, wodurch während des Erhitzens individuell Einfluss auf den Erhitzungsvorgang durch Verstellen des Elements und dadurch auf eine Temperaturverteilung innerhalb des zu erhitzenden Bauteils genommen werden kann.

Zweckmäßig ist das Element aus Kupfer, aus Aluminium oder aus einem Kunststoff mit eingebetteten Weicheisenteilen ausgebildet. Kupfer sowie Aluminium sind sowohl thermisch als auch elektrisch gut leitende Werkstoffe, wobei selbstverständlich auch andere, ebenfalls thermisch und elektrisch gut leitende Werkstoffe für die Verwendung beim Element denkbar sind. Für die Kunststofflösung kommen insbesondere thermoplastische Hochleistungskunststoffe mit einer homogenen Füllung mit Weicheisenpartikeln in Betracht, mittels welcher die örtliche Abschirmung oder die örtliche Konzentration von Magnetfeldern möglich ist. Derartige ferromagnetische Kunststoffe sind dabei insbesondere in Frequenzbereichen von 3 kHz bis 3 MHz und bei magnetischen Permeabilitäten zwischen 7 und 120 mµ einsetzbar. Aufgrund der homogenen Verteilung der Weicheisenpartikel in der Kunststoffmatrix werden darüber hinaus vorzugsweise isotrope magnetische Eigenschaften erreicht.

Bei einer weiteren vorteilhaften Ausführungsform der erfindungsgemäßen Lösung, sind die äußere Induktionsspule und/oder die innere Induktionsspule in eine Vergussmasse eingebettet, wobei die äußere Induktionsspule, die innere Induktionsspule, insbesondere die zugehörigen Vergussmassen und/oder das zumindest eine Element gekühlt sind. Die individuelle Kühlung einzelner Bauteile der erfindungsgemäßen Heizvorrichtung ermöglicht eine bedarfsgerechte Steuerung, wodurch sich insbesondere die Temperatur des zu erhitzenden Bauteils individuell beeinflussen lässt. Gleichzeitig ermöglichen derartig gekühlte Komponenten einen gleichförmigen Erhitzungsprozess unabhängig von der Anzahl der zu erhitzenden Bauteile, wodurch eine durchgehend qualitativ hochwertige Fertigung erreicht werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: eine erfindungsgemäße Heizvorrichtung zum Erhitzen von insbesondere unrunden, hohlen Bauteilen,
- Fig. 2a: ein von der erfindungsgemäßen Heizvorrichtung erhitzter Nocken,
- Fig. 2b: ein mittels einer herkömmlichen Heizvorrichtung erhitzter Nocken.

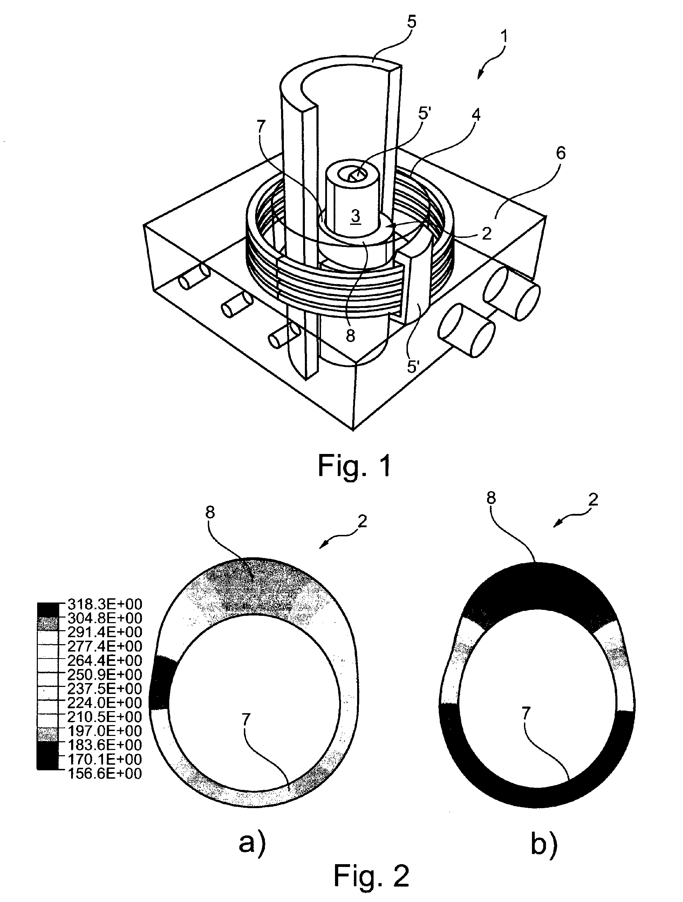

Entsprechend der Fig. 1, weist eine erfindungsgemäße Heizvorrichtung 1 zum Erhitzen von asymmetrischen, insbesondere unrunden, hohlen Bauteilen 2, wie beispielsweise einem Nocken, zumindest eine das zu erhitzende Bauteil 2 durchdringende innere Induktionsspule 3 und/oder eine, das zu erhitzende Bauteil 2 umgebende äußere Induktionsspule 4 auf. Zusätzlich weist die erfindungsgemäße Heizvorrichtung 1 zumindest ein Element 5 auf, das in Bereichen des zu erhitzenden Bauteils 2, die sich schneller als die übrigen Bereiche erhitzen, beispielsweise weil sie dünner sind, zwischen der jeweiligen Induktionsspule 3,4 und dem zu erhitzenden Bauteil 2 positioniert ist. Das zumindest eine Element 5 ist dabei erfindungsgemäß zwischen der inneren/äußeren Induktionsspule 3, 4 und dem Bauteil 2 positioniert und schwächt dabei in diesem Bereich das zwischen der inneren Induktionsspule 3 und/oder der äußeren Induktionsspule 4 beim Betrieb der Heizvorrichtung 1 erzeugte Magnetfeld ab. Hierdurch ist ein vergleichsweise gleichförmiges Erhitzen des Bauteils 2, das heißt beispielsweise des Nockens möglich, wodurch ein besonders gleichförmiges Fügen mit geringem Verzug im zu erhitzenden Bauteil 2 erreicht werden kann.

Zusätzlich oder alternativ hierzu kann ein das beim Betrieb der Heizvorrichtung 1 entstehendes Magnetfeld beeinflussendes Element 5' in Bereichen des zu erhitzenden Bauteils 2, die sich langsamer als die übrigen Bereiche erhitzen, beispielsweise weil sie dicker sind, innerhalb der inneren Induktionsspule 3 und/oder außerhalb der äußeren Induktionsspule 4 positioniert werden und dadurch das Magnetfeld in diesem Bereich verstärken, wodurch ebenfalls ein vergleichsweise gleichförmiges Erhitzen erreicht werden kann. Das Element 5' wirkt somit als Konzentrator, der das Magnetfeld in diesem Bereich verstärkt und dadurch das erhitzen forciert.

Wie bereits erwähnt, kann das zu erhitzende Bauteil 2 beispielsweise ein Nocken für eine Nockenwelle sein, wobei die äußere Induktionsspule 4 gemäß der Fig. 1 in eine Vergussmasse 6 eingebettet ist. In gleicher Weise kann selbstverständlich auch die innere Induktionsspule 3 in eine derartige Vergussmasse eingebettet sein. Zusätzlich ist vorstellbar, dass die äußere Induktionsspule 4, die innere Induktionsspule 3, insbesondere deren Vergussmassen 6, und/oder das zumindest eine Element 5,5' gekühlt werden können.

Zur individuellen Beeinflussung des Erhitzungsprozesses kann das zumindest eine Element 5,5' zusätzlich verstellt werden, beispielsweise elektrisch, pneumatisch oder hydraulisch. Wie der Fig. 1 zu entnehmen ist, weist das erfindungsgemäße Element 5 eine rinnenförmige Gestalt auf und schirmt dadurch insbesondere einen Grundkreis 7 (vgl. Fig. 2a, b) des zu erhitzenden Bauteils 2 ab. Das Element 5,5' kann beispielsweise aus Kupfer oder Aluminium ausgebildet sein, sollte jedoch in allen Fällen eine gute thermische und elektrische Leitfähigkeit aufweisen. Generell kann das Element 5,5' auch aus einem Kunststoff mit eingebetteten Weicheisenteilen ausgebildet sein, wobei hier insbesondere thermoplastische Hochleistungskunststoffe mit einer homogenen Füllung mit Weicheisenpartikeln in Betracht kommen, mittels welcher die örtliche Abschirmung oder die örtliche Konzentration von Magnetfeldern möglich ist. Derartige ferromagnetische Kunststoffe sind dabei in weiten Frequenzbereichen und magnetischen Permeabilitäten einsetzbar und erreichen aufgrund der homogenen Verteilung der Weicheisenpartikel in der Kunststoffmatrix darüber hinaus isotrope magnetische Eigenschaften. Die genannten Kunststoffe lassen sich nicht nur kostengünstig fertigen, sondern auch leicht herstellen, insbesondere spangebend und ohne Nachzuschleifen nachbearbeiten und mit entsprechenden Formen in nahezu beliebige Formen gießen/spritzen.

Betrachtet man die Fig. 2a im Vergleich zur Fig. 2b, so kann man erkennen, dass bei der Fig. 2a ein deutlich geringerer Temperaturunterschied über den Umfang des zu erhitzenden Bauteil 2, welches hier als Nocken ausgebildet ist, zu beobachten ist. Bei der Fig. 2b weist beispielsweise eine Nockenerhebung 8 eine deutlich geringere Temperatur auf, als der Grundkreis 7, womit ein eindeutig höherer Verzug einhergeht. Um die Nockenerhebung 8 gemäß der Fig. 2b auf das Temperaturniveau wie in Fig. 2a anheben zu können, müsste der Grundkreis 7 deutlich höher erwärmt werden, womit jedoch ein Anlassen und damit ein unerwünschter Härteabfall einhergehen würden.

Mit der erfindungsgemäßen Heizvorrichtung 1 kann somit ein Nocken vergleichsweise gleichförmig, das heißt gleichmäßig erhitzt werden, wodurch insbesondere ein späterer Fügeprozess mit einer nicht dargestellten Nockenwelle vereinfacht und verbessert wird, auf jeden Fall aber ein unerwünschter Härteabfall am Grundkreis 7 durch ein übermäßiges Erhitzen vermieden werden kann. Das Element 5,5', welches beispielsweise als Abschirm-/Verstärkungsblech ausgebildet ist, schirmt dabei den Grundkreis 7 ab und/oder verstärkt das Magnetfeld im Bereich der Nockenerhebung 8, so dass sich der Grundkreis 7 in Folge deutlich weniger stark und die Nockenerhebung 8 deutlich stärker erhitzen. Die gleichmäßige Erwärmung des Nockens kann dabei beispielsweise über ein entsprechendes Härtebild oder entsprechende Anlassfarben visualisiert werden.

Mit den erfindungsgemäßen Elementen 5,5' lässt sich somit das das Erhitzen bewirkende Magnetfeld abschirmen oder verstärken, wodurch der Erhitzungsprozess exakt steuerbar ist und insbesondere ein qualitativ hochwertiges Fügen von Nocken auf einer Nockenwelle ermöglicht. Von besonderem Vorteil ist darüber hinaus, dass die Heizvorrichtung 1 durch ein einfaches Verwenden unterschiedlicher Elemente 5,5' leicht an sich ändernde Bauteilgeometrien von zu erwärmenden hohlen Bauteilen 2, wie beispielsweise Nocken, angepasst werden kann, ohne an den Induktionsspulen 3,4 irgendetwas ändern zu müssen.

## Patentansprüche

1. Heizvorrichtung (1) zum Erhitzen von insbesondere unrunden, hohlen Bauteilen (2),
- mit zumindest einer das zu erhitzende Bauteil (2) durchdringenden inneren Induktionsspule (3) mit zumindest einem, das sich beim Betrieb der Heizvorrichtung (1) bildende Magnetfeld beeinflussenden Element (5,5'), das
- in Bereichen des zu erhitzenden Bauteils (2), die sich schneller als die übrigen Bereiche erhitzen, beispielsweise weil sie dünner sind, zwischen der inneren Induktionsspule (3) und dem zu erhitzenden Bauteil (2) positioniert ist und dadurch das Magnetfeld in diesem Bereich schwächt, und/oder
- in Bereichen des zu erhitzenden Bauteils (2), die sich langsamer als die übrigen Bereiche erhitzen, beispielsweise weil sie dicker sind, innerhalb der inneren Induktionsspule (3) positioniert ist und dadurch das Magnetfeld in diesem Bereich verstärkt, wodurch ein vergleichsweise gleichförmiges Erhitzen erreicht werden kann,
und/oder
- mit zumindest einer das zu erhitzende Bauteil (2) umgebenden äußeren Induktionsspule (4) mit zumindest einem, das sich beim Betrieb der Heizvorrichtung (1) bildende Magnetfeld beeinflussenden Element (5,5'), das
- in Bereichen des zu erhitzenden Bauteils (2), die sich schneller als die übrigen Bereiche erhitzen, beispielsweise weil sie dünner sind, zwischen der äußeren Induktionsspule (4) und dem zu erhitzenden Bauteil (2) positioniert ist und dadurch das Magnetfeld in diesem Bereich schwächt, und/oder
- in Bereichen des zu erhitzenden Bauteils (2), die sich langsamer als die übrigen Bereiche erhitzen, beispielsweise weil sie dicker sind, außerhalb der äußeren Induktionsspule (4) positioniert ist und dadurch das Magnetfeld in diesem Bereich verstärkt, wodurch ein vergleichsweise gleichförmiges Erhitzen erreicht werden kann.

2. Heizvorrichtung nach Anspruch 1,
**dadurch gekennzeichnet,**
**dass** die Heizvorrichtung (1) zum Erhitzen eines Nockens für eine Nockenwelle ausgebildet ist.

3. Heizvorrichtung nach Anspruch 1 oder 2,
**dadurch gekennzeichnet,**
**dass** die äußere Induktionsspule (4) und/oder die innere Induktionsspule (3) in eine Vergussmasse (6) eingebettet sind/ist.

4. Heizvorrichtung nach Anspruch 3,
**dadurch gekennzeichnet,**
**dass** die äußere Induktionsspule (4), die innere Induktionsspule (3), insbesondere die Vergussmasse(n) (6) und/oder das zumindest eine Element (5,5') gekühlt sind/ist.

5. Heizvorrichtung nach einem der Ansprüche 1 bis 4,
**dadurch gekennzeichnet,**
**dass** das wenigstens eine Element (5,5') insbesondere elektrisch, pneumatisch oder hydraulisch verstellbar ist.

6. Heizvorrichtung nach einem der Ansprüche 1 bis 5,
**dadurch gekennzeichnet,**
**dass** das zumindest eine Element (5,5') eine rinnenförmige oder eine klammerartige Gestalt aufweist.

7. Heizvorrichtung nach einem der Ansprüche 1 bis 6,
**dadurch gekennzeichnet,**
**dass** das zumindest eine Element (5,5') aus Kupfer oder Aluminium oder aus einem Kunststoff mit eingebetteten Weicheisenteilen ausgebildet ist.

8. Verfahren zum Erhitzen eines Nockens als Vorbereitung für einen späteren Fügeprozess, mit einer Heizvorrichtung (1) nach einem der vorhergehenden Ansprüche, bei dem
- der zu erhitzende Nocken auf eine innere Induktionsspule (3) aufgefädelt und von einer äußeren Induktionsspule (4) umgeben wird,
- zumindest ein, ein beim Betrieb der Heizvorrichtung (1) entstehendes Magnetfeld beeinflussendes Element (5) im Bereich eines Grundkreises (7) des Nockens zwischen der inneren und der äußeren Induktionsspule (3,4) und dem Nocken positioniert wird, und/oder
- zumindest ein, das beim Betrieb der Heizvorrichtung (1) entstehende Magnetfeld beeinflussende Element (5') im Bereich einer Nockenerhebung (8) innerhalb der inneren Induktionsspule (3) und/oder außerhalb der äußeren Induktionsspule (4) positioniert wird,
- die innere und/oder die äußere Induktionsspule (3,4) bestromt werden und dadurch das den Nocken erhitzende Magnetfeld erzeugt wird, wobei das Magnetfeld im Bereich des Elements (5,5') durch dasselbe geschwächt oder verstärkt wird, so dass ein vergleichsweise gleichförmiges Erhitzen des Nockens erreicht wird.

9. Verfahren nach Anspruch 8,
**dadurch gekennzeichnet,**
**dass** der erhitze Nocken aus der Heizvorrichtung (1) entnommen und auf die Nockenwelle aufgefädelt wird.

## Claims

1. Heating device (1) for heating in particular noncircular, hollow components (2),
- comprising at least one inner induction coil (3) which penetrates the component (2) to be heated, and comprising at least one element (5, 5') which influences the magnetic field forming during operation of the heating device (1), which element
- is positioned in regions of the component (2) to be heated which heat up more quickly than the other regions, for example because they are thinner, between the inner induction coil (3) and the component (2) to be heated, and thereby weakens the magnetic field in this region, and/or
- is positioned in regions of the component (2) to be heated which heat up more slowly than the other regions, for example because they are thicker, within the inner induction coil (3), and thereby strengthens the magnetic field in this region, whereby comparatively even heating can be achieved,
and/or
- comprising at least one outer induction coil (4) which surrounds the component (2) to be heated, and comprising at least one element (5, 5') which influences the magnetic field forming during operation of the heating device (1), which element
- is positioned in regions of the component (2) to be heated which heat up more quickly than the other regions, for example because they are thinner, between the outer induction coil (4) and the component (2) to be heated, and thereby weakens the magnetic field in this region, and/or
- is positioned in regions of the component (2) to be heated which heat up more slowly than the other regions, for example because they are thicker, outside the outer induction coil (4), and thereby strengthens the magnetic field in this region, whereby comparatively even heating can be achieved.

2. Heating device according to claim 1,
**characterised in that**
the heating device (1) is designed to heat a cam for a camshaft.

3. Heating device according to either claim 1 or claim 2,
**characterised in that**
the outer induction coil (4) and/or the inner induction coil (3) is/are embedded in a casting compound (6).

4. Heating device according to claim 3,
**characterised in that**
the outer induction coil (4), the inner induction coil (3), in particular the casting compound(s) (6) and/or the at least one element (5, 5') is/are cooled.

5. Heating device according to any of claims 1 to 4,
**characterised in that**
the at least one element (5, 5') is in particular electrically, pneumatically or hydraulically adjustable.

6. Heating device according to any of claims 1 to 5,
**characterised in that**
the at least one element (5, 5') has a channel-like or a clamp-like shape.

7. Heating device according to any of claims 1 to 6,
**characterised in that**
the at least one element (5, 5') is formed of copper or aluminium or of a plastics material having embedded soft iron parts.

8. Method for heating a cam in preparation for a subsequent joining process, comprising a heating device (1) according to any of the preceding claims, in which
- the cam to be heated is threaded onto an inner induction coil (3) and surrounded by an outer induction coil (4),
- at least one element (5) which influences a magnetic field forming during operation of the heating device (1) is positioned in the region of a base circle (7) of the cam between the inner and outer induction coils (3, 4) and the cam, and/or
- at least one element (5') which influences the magnetic field forming during operation of the heating device (1) is positioned in the region of a cam elevation (8) within the inner induction coil (3) and/or outside the outer induction coil (4),
- the inner and/or the outer induction coils (3, 4) are supplied with power and the magnetic field which heats the cam is thereby generated, wherein the magnetic field in the region of the element (5, 5') is weakened or strengthened by said element such that comparatively even heating of the cam is achieved.

9. Method according to claim 8,
**characterised in that**
the heated cam is removed from the heating device (1) and threaded onto the camshaft.

## Revendications

1. Dispositif de chauffage (1) destiné en particulier à chauffer des composants (2) creux et non circulaires,
- avec tout au moins une bobine d'induction intérieure (3) pénétrant dans le composant (2) à chauffer, avec tout au moins un élément (5, 5') qui influence le champ magnétique qui se forme lors du fonctionnement du dispositif de chauffage (1), ledit élément (5, 5')
- étant positionné dans des zones du composant (2) à chauffer qui chauffent plus rapidement que les zones restantes, par exemple parce qu'elles sont plus minces, entre la bobine d'induction intérieure (3) et le composant (2) à chauffer, et affaiblissant de ce fait le champ magnétique situé dans cette zone, et/ou
- étant positionné dans des zones du composant (2) à chauffer, qui chauffent plus lentement que les zones restantes, par exemple parce qu'elles sont plus épaisses, à l'intérieur de la bobine d'induction intérieure (3), et renforçant de ce fait le champ magnétique situé dans cette zone, ce qui permet d'obtenir ainsi un chauffage comparativement homogène,
et/ou
- avec tout au moins une bobine d'induction extérieure (4) qui encercle le composant (2) à chauffer, avec tout au moins un élément (5, 5') qui influence le champ magnétique qui se forme lors du fonctionnement du dispositif de chauffage (1), ledit élément (5, 5')
- étant positionné dans des zones du composant (2) à chauffer qui chauffent plus rapidement que les zones restantes, par exemple parce qu'elles sont plus minces, entre la bobine d'induction extérieure (4) et le composant (2) à chauffer, et affaiblissant de ce fait le champ magnétique situé dans cette zone, et/ou
- étant positionné dans des zones du composant (2) à chauffer qui chauffent plus lentement que les zones restantes, par exemple parce qu'elles sont plus épaisses, à l'extérieur de la bobine d'induction extérieure (4), et renforçant de ce fait le champ magnétique situé dans cette zone, ce qui permet d'obtenir ainsi un chauffage comparativement homogène.

2. Dispositif de chauffage selon la revendication 1,
**caractérisé en ce que**
le dispositif de chauffage (1) est conçu en vue de chauffer une came pour un arbre à cames.

3. Dispositif de chauffage selon la revendication 1 ou 2,
**caractérisé en ce que**
la bobine d'induction extérieure (4) et/ou la bobine d'induction intérieure (3) est/sont enrobée(s) dans une masse de remplissage (6).

4. Dispositif de chauffage selon la revendication 3,
**caractérisé en ce que**
la bobine d'induction extérieure (4), la bobine d'induction intérieure (3), en particulier la ou les masses de remplissage (6) et/ou tout au moins un élément (5, 5') est/sont refroidi(s).

5. Dispositif de chauffage selon l'une des revendications 1 à 4,
**caractérisé en ce que**
l'au moins un élément (5, 5') est réglable, en particulier de manière électrique, pneumatique ou hydraulique.

6. Dispositif de chauffage selon l'une des revendications 1 à 5,
**caractérisé en ce que**
l'au moins un élément (5, 5') présente une structure en forme de rainure ou à la manière d'une agrafe.

7. Dispositif de chauffage selon l'une des revendications 1 à 6,
**caractérisé en ce que**
l'au moins un élément (5, 5') est conçu en cuivre ou en aluminium ou en une matière plastique avec des parties enfoncées en fer doux.

8. Procédé destiné à chauffer une came en vue de préparer un processus d'assemblage ultérieur, avec un dispositif de chauffage (1) selon l'une des revendications précédentes, pour lequel
- la came à chauffer est enfilée sur une bobine d'induction intérieure (3) et encerclée par une bobine d'induction extérieure (4),
- tout au moins l'un des éléments (5) influençant le champ magnétique produit lors du fonctionnement du dispositif de chauffage (1) est positionné dans la zone d'un cercle de base (7) de la came, entre la bobine d'induction intérieure et la bobine d'induction extérieure (3,4), d'une part, et la came, d'autre part, et/ou
- tout au moins l'un des éléments (5') influençant le champ magnétique produit lors du fonctionnement du dispositif de chauffage (1) est positionné dans la zone d'un bossage de came (8), à l'intérieur de la bobine d'induction intérieure (3) et/ou à l'extérieur de la bobine d'induction extérieure (4),
- la bobine d'induction intérieure et/ou la bobine d'induction extérieure (3,4) sont alimentées en courant et le champ magnétique chauffant la came est généré de ce fait, dans lequel le champ magnétique est affaibli ou renforcé dans la zone des éléments (5, 5') par ces derniers, de telle sorte qu'un chauffage comparativement homogène de la came est obtenu.

9. Procédé selon la revendication 8,
**caractérisé en ce que**
la came chauffée est prélevée du dispositif de chauffage (1) et est enfilée sur l'arbre à cames.
